(19) Europäisches Patentamt
European Patent Office
Office européen des brevets

(11) **EP 2 072 195 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**01.03.2017 Patentblatt 2017/09**

(51) Int Cl.:
***B25J 9/16*** *(2006.01)* ***G05B 19/416*** *(2006.01)*

(45) Hinweis auf die Patenterteilung:
**15.05.2013 Patentblatt 2013/20**

(21) Anmeldenummer: **08021240.0**

(22) Anmeldetag: **06.12.2008**

(54) **Verfahren zum Steuern der Bewegung eines Roboters innerhalb eines Arbeitsraums**

Method for controlling the movement of a robot within a work room

Procédé de commande du mouvement d'un robot à l'intérieur d'une salle de travail

(84) Benannte Vertragsstaaten:
**DE FR IT SE**

(30) Priorität: **19.12.2007 DE 102007061323**

(43) Veröffentlichungstag der Anmeldung:
**24.06.2009 Patentblatt 2009/26**

(73) Patentinhaber: **KUKA Roboter GmbH**
**86165 Augsburg (DE)**

(72) Erfinder: **Weiss, Dr. Martin**
**86459 Margertshausen (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A- 0 382 231       EP-A- 0 743 579**
**EP-A- 1 260 323       EP-A- 1 332 841**
**DE-A1- 10 361 132     JP-A- 11 347 983**
**US-A- 5 589 750       US-A- 6 166 504**
**US-A1- 2007 046 677**

• **H. B. KIEF: 'NC/CNC Handbuch', 2000, CARL HANSER VERLAG, MÜNCHEN - WIEN Seiten 31 - 34**

EP 2 072 195 B2

**Beschreibung**

Die Erfindung betrifft ein Verfahren zum Steuern der Bewegung eines Roboters innerhalb eines durch Grenzen begrenzten Arbeitsraumes.

Einem Roboter wird zum Arbeiten ein - in der Regel kartesischer - Arbeitsraum zugewiesen, dessen Grenzen der Roboter nicht überschreiten darf. Der Arbeitsraum wird sicher überwacht. Ein Verfahren wird dabei im Folgenden als "sicher" bezeichnet, wenn sie Kategorie 3 der Norm EN ISO 13849 - 1 (1999) entsprechend DIN EN 954 - 1 erfüllt: Ein einzelner Fehler kann nicht zum Verlust der Sicherheitsfunktion führen. Wenn in angemessener Weise möglich, muss ein Fehler erkannt werden. Bisher bekannte Überwachungen führen dazu, dass ein Roboter in einem Fehlerfalle, wie bei Ausfall eines Antriebs, erst dann zu bremsen beginnt, sobald er bzw. sein am weitesten austragendes Teil, wie ein Effektor in Form eines Werkzeugs, ein Tool-Center-Point (TCP) desselben oder ein anderer Punkt des Roboters die Grenze des Arbeitsraums durchbricht. Damit der Roboter auch in einem solchen Fehlerfalle nicht in den seinen Arbeitsraum umgebenden eigentlichen zu schützenden Raum oder Schutzraum einbricht, muss der Anwender den zu überwachenden tatsächlichen Arbeitsraum entsprechend kleiner wählen, so dass der Roboter beim Abbremsen im Fehlerfalle noch vor Erreichen der Grenze zum schützenden Raum zum Stillstand kommt. Es muss also eine Bremszone mit einem garantierten sicheren Abstand zwischen überwachtem Arbeitsraum und Schutzraum vorgesehen werden. Es ist äußerst schwierig für den Anwender einen solchen Abstand zu berechnen.

Weiterhin kann bei vielen Bahnen ein Roboter bzw. sein am weitesten austragendes Teil, wie ein Effektor oder der TCP eines Werkzeugs im störungsfreien Betrieb ohne weiteres sehr nah an der Grenze des Arbeitsraums entlang fahren. Allerdings ist bei Ausfall eines Antriebs kein bahntreuer Stopp mehr gewährleistet, sondern lediglich ein sicherer Stopp, z.B. mit Motorbremsen mit geringen Bremsmomenten, wobei der Roboter allerdings die vorgesehene Bewegungsbahn verlassen kann und bei einem solchen sicheren Stopp aus diesem Grunde außerhalb des überwachten Arbeitsbereichs zum Stehen kommt. Auch dabei ist nicht garantiert, dass der Schutzbereich nicht verletzt wird, falls keine Bremszone zwischen dem Schutzraum und dem zu überwachenden Arbeitsraum eingerichtet wird.

Die EP 1 332 841 A2 schlägt vor, die aktuelle Position und Geschwindigkeit eines Roboters durch Messung zu erfassen, in Abhängigkeit von der Position eine Maximalgeschwindigkeit zu bestimmen und die Roboterbewegung bei Erreichen der Maximalgeschwindigkeit zu bremsen oder anzuhalten.

Wird die aktuelle Bewegung des Roboters überwacht und bei hinsichtlich Abstand von der Grenze des überwachten Raumes und Geschwindigkeit in kritischen Fällen abweichend von der geplanten Bahn (wobei "Bahn" Weg und Geschwindigkeit meint) während der Bewegung (im Interpolator der Robotersteuerung) rechtzeitig - über einen Override-Mechanismus die Geschwindigkeit reduziert bzw. eine Stillsetzung des Roboters derart veranlasst, sind folgende Nachteile gegeben:

Schaltaktionen (Trigger) mit negativer zeitlicher Verschiebung ("negativer Verzögerung"), wie z.B. "öffne Kleberdüse 500 msec vor Erreichen des programmierten Punktes P28", (die erforderlich sind, wenn z.B. in diesem Fall eine zeitliche Verzögerung der Mechanik von 500 msec bekannt ist), können nicht präzise geschaltet werden. Schaltaktionen mit negativer Verzögerung werden z.B. verwendet, um Verzögerungen zwischen der Änderung eines Ausgangs und dem Ansprechen eines technischen Geräts auszugleichen, denn mit einer Override-Änderung zur Interpolationszeit ist prinzipiell keine Vorhersage der Geschwindigkeit mehr möglich. Die Variation der Geschwindigkeit passiert sogar in jedem Produktions-Zyklus, d.h. es wird ständig unpräzise geschaltet, obwohl in jedem Zyklus die Geschwindigkeitsänderung (=Reduzierung) deterministisch dieselbe ist (eine Override-Regelung basierend auf Ist-Werten für die Funktionalität "Sichere Bereichsüberwachung" ist ebenfalls möglich). Soll am Punkt Pi ein Prozess geschaltet werden; muss wegen Totzeiten und Schaltverzögerungen der entsprechende Aushang z.B. um $T0=500$ msec vor Pi aktiviert werden. Diese Zeitinformation wird anhand der geplanten nominalen (konstanten) Geschwindigkeit V0 in eine Weginformation $S0=V0*T0$ umgerechnet, so dass S0 Wegeinheiten vor Pi, am Punkt P0, geschaltet wird. Durch die Geschwindigkeitsreduzierung gemäß der Override-Regelung verringert sich die Bahngeschwindigkeit, so dass tatsächlich am Punkt P_reduziert VOR Pi geschaltet wird.

Eine konstante Prozessgeschwindigkeit kann nicht garantiert werden. Selbst wenn die Planungsinstanz eine Bewegung, wie z.B. eine Linearbewegung mit konstanter Geschwindigkeit in der Konstantfahrphase berechnet hat, kann nachträglich der Interpolator über die Override-Regelung wegen der Funktionalität "sichere Bereiche" die Geschwindigkeit reduzieren. Das ist für viele Prozesse fatal, da etwa beim Lasern (Laserschneiden, Laserschweißen) die eingebrachte Energie proportional zum Weg sein muss, um konstante Prozessqualität zu garantieren. Ähnliches gilt beim Kleben. Eine Steuerung des Prozesses (z.B. Laserenergie, Dicke des Klebeauftrags) in Abhängigkeit von der Robotergeschwindigkeit ist oft nicht möglich. Natürlich ist wegen der Forderung nach sicher überwachten Bereichen eventuell eine zunächst gewünschte Geschwindigkeit nicht realisierbar. Möglich wäre aber eine konstante, gegebenenfalls reduzierte Geschwindigkeit in der Konstantfahrphase, die auf der gesamten Kontur den sicheren Stopp garantiert. Bei dieser niedrigeren konstanten Geschwindigkeit kann durch geringere (aber konstante) Laserenergie, Klebedüsenöffnung etc. die gewünschte konstante Prozessqualität garantiert werden.

Selbst wenn eine Steuerung des Prozesses (z.B. Laserenergie, Dicke des Kleberauftrags) in Abhängigkeit von der Robotergeschwindigkeit möglich ist, leidet die Prozessqualität, d.h. die Qualität ist nicht konstant. Die möglicherweise geschwindigkeitsabhängigen Material- oder Energieraten von Dosiereinrichtungen, wie Klebedüsen, können durch mechanische Unzulänglichkeiten, Regelungseffekte, zeitliche Verzögerungen oder nur schwache Ankopplung der Prozesstechnik an die Robotersteuerung nie perfekt mit dem Roboter synchronisiert werden.

Eine nur punktuelle Betrachtung/Optimierung zur Reduzierung des Override, die zudem im Gegensatz zur Planung in der eingeschränkten Zeit eines Interpolationstaktes durchgeführt werden muss, ist prinzipiell einer globalen Optimierung in einer Planungsinstanz unterlegen, die globale Betrachtungen etwa zur Schwingungsvermeidung durchführen kann, die Override-Regelung bremst eventuell lokal zu ruppig und regt dadurch Schwingungen an; bei einer globalen Betrachtung wäre eine frühere sanftere Bremsung eventuell ausreichend gewesen und hätte keine Schwingungen angeregt. Wie vorstehend schon beschrieben, wird dieses nachteilige Geschwindigkeitsprofil in jedem Zyklus durchfahren.

Die wahre Taktzeit einer Bewegung ist prinzipiell erst nach der Interpolation bekannt, d.h. nachdem die Bahn gefahren wurde. In einer Visualisierung bzw. für Optimierungsverfahren ist daher die Taktzeit in der Planung nicht effizient ermittelbar. Die geplante Taktzeit ist nur eine untere Schranke. Bei Dosiervorrichtungen mit konstanter, unveränderlicher Dosierrate wird üblicherweise die Einbringung einer definierten Materialmenge erreicht, indem für eine Bewegungskontur eine feste Ausführungsdauer programmiert wird. Wird die Ausführungszeit aber nachträglich verändert, ändert sich auch die Materialmenge.

Die JP 11-347 983 A schlägt eine Geschwindigkeitsreduzierung im Betrieb vor, wenn ein Slave-Arm eines Master-Slave-Manipulators sich einer vorgegebenen Grenze nähert.

Der Erfindung liegt die Aufgabe zugrunde, unter Vermeidung der oben genannten Nachteile sicherzustellen, dass auch bei einer Fehlfunktion ein Roboter beim Abbremsen die Grenzen eines ihm zugewiesenen Arbeitsraums nicht überschreitet, ohne dass der Arbeitsraum in unnötiger Weise eingeschränkt wird.

Die genannte Aufgabe wird erfindungsgemäß bei einem Verfahren der eingangs genannten Art dadurch gelöst, dass die Bahngeschwindigkeit des Roboters mit dem Reduzieren des Abstands zur Grenze des Arbeitsraums derart verringert geplant wird, dass beim Bremsen der Roboter innerhalb der Grenzen des Arbeitsraums zum Stillstand kommt. Der Roboter wird entsprechend dieser Bahnplanung in der Interpolation derart vorgesteuert.

In bevorzugter Ausgestaltung ist vorgesehen, dass der Roboter mit derart vorbestimmten Bahngeschwindigkeiten bewegt wird, dass ein der jeweiligen Bahngeschwindigkeit zugehöriger Bremsweg kleiner als der jeweilige Abstand des Effektors oder des TCP von der Grenze des Arbeitsraums ist, oder als Ungleichung:

$$F(q(s(t)), \ d/dt \ q(s(t)), \ d^2/dt^2 \ q(s(t))) < A \ (q(s(t))),$$

wobei F den maximalen Bremsweg, A den Abstand des Roboters zum TCP zur Arbeitsraumgrenze, q Koordinaten in einem geregelten Koordinatensystem, S ein Bahnparameter, wie eine Bogenlänge und t die Zeit ist.

Durch die Erfindung wird erreicht, dass bei größerem Abstand eines Punktes am Roboter, insbesondere dessen Tool-Center-Point, zu den Grenzen des vorgegebenen Arbeitsraumes mit höheren Geschwindigkeiten gearbeitet werden kann, da in diesem Falle längere Bremswege zulässig sind, während durch das erfindungsgemäße Verfahren sichergestellt ist, dass gerade dann, wenn der Roboter auf seiner Bahn nahe zu den Grenzen des Arbeitsraumes gelangt, die Geschwindigkeit derart reduziert wird, dass immer noch ein sicheres Bremsen in dem Sinne möglich ist, dass der Roboter zum Stillstand kommt, bevor sein Tool-Center-Point die Arbeitsraumgrenze und damit den geschützten Bereich erreicht.

Die Geschwindigkeit des Roboters kann zunächst so geplant und dann in der Interpolation so vorgesteuert werden, dass jeweils der Abstand der Außenkontur einer durch die aktuelle Position des TCP des Roboters als Mittelpunkt und des momentanen Bremswegs als Radius bestimmten Kugel zur nächsten Grenze des Arbeitsraums größer als Null ist. Damit wird das Geschwindigkeitsprofil derart geplant und somit werden die Bewegungen des Roboters im Betrieb derart gesteuert, dass der Abstand einer Kugel mit dem Mittelpunkt der aktuellen Position des Tool-Center-Points und einem dem sicheren Bremsweg entsprechenden Radius zum Rand zur Grenze des Arbeitsbereichs noch - in positiver Richtung vom Mittelpunkt der Kugel zur nächsten Grenze des Arbeitsbereichs - größer Null ist.

Darüber hinaus kann in an sich bekannter Weise vorgesehen sein, dass der Bremsweg in einem Bahnpunkt bei der Bahnplanung aufgrund der dem Bahnpunkt zugehörigen Geschwindigkeit und Beschleunigung des Roboters bestimmt wird und/oder, dass der Roboter entsprechend einer über einen Bahnparameter, wie der Bogenlänge, parametrierten Bahn bewegt wird.

Weiterhin wird in an sich ebenfalls bekannter Weise für den Bahnparameter ein Geschwindigkeitsprofil geplant, also dessen Funktion in Abhängigkeit von der Zeit, wobei dies derart erfolgt, dass die jeweilige Bahnpunkten zugehörige Geschwindigkeit in Abhängigkeit von weiteren Nebenbedingungen, wie maximal zulässigen Geschwindigkeiten, Beschleunigungen, achsspezifischen und/oder kartesischen Rucken, Motormomenten, Getriebemomenten oder der kinetischen Energie bestimmt wird.

3

Die Erfindung geht von in nicht sicherer Technik ausgeführter Planung und Interpolation, aber sicherer Überwachung im Sinne der eingangs gegebenen Definition von Schutzraum durch sichere Bremsung aus, als insbesondere redundanter zweikanaliger und diversitärer Überwachung und entsprechend ausgelagerten Bremseinrichtungen.

Weitere Vorteile und Merkmale der Erfindung ergeben sich aus den Ansprüchen und aus der nachfolgenden Beschreibung, in der die Erfindung unter Bezugnahme beispielhaft auf die Zeichnung beispielhaft erläutert ist. Dabei zeigt:

**Fig. 1**    eine schematische Darstellung einer Robo- terbahn in einem Arbeitsraum;

**Fig.2**    ein Ablaufdiagramm zum erfindungsgemäßen Verfahren; und

**Fig.3**    eine schematische Darstellung zur Wirkung des Einsatzes des erfindungsgemäßen Verfah- rens.

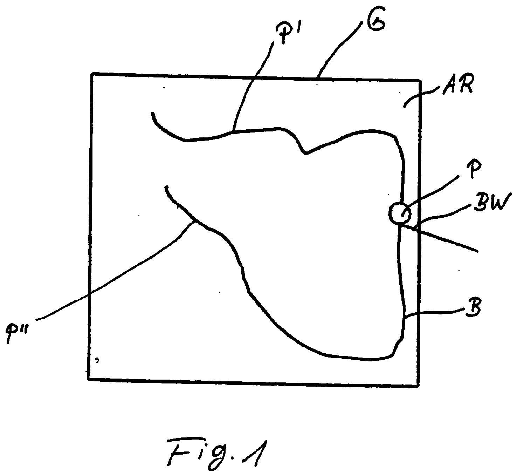

Die Fig. 1 zeigt einen Arbeitsraum AR, in dem sich ein Roboter, insbesondere sein TCP oder Effektor auf einer Bahn B bewegt. Mit P ist ein Punkt der Bahn bezeichnet, bei dem die Bahn B nah an die Grenze G des Arbeitsraumes AR gelangt. Bewegt sich der Roboter im Punkt P mit einer vorgeplanten hohen Geschwindigkeit, wie sie beispielsweise für die Punkte P' und P" vorgesehen und geeignet ist, so besteht die Gefahr, dass, wenn der Roboter im Punkt P stillgesetzt bzw. gebremst werden muss, beispielsweise aus Sicherheitsgründen, er seine Bahn B verlässt und über den Bremsweg BW den Arbeitsraum AR verlässt und damit in einen geschützten Bereich gerät, in dem beispielsweise Personen sich aufhalten können, die dann geschädigt, insbesondere verletzt werden können.

Zur Vermeidung dieser Problematik sieht die Erfindung, wie oben dargelegt wurde, vor, dass im Rahmen der Bahnplanung die Roboterbahn B derart hinsichtlich ihrer Geschwindigkeit geplant wird, dass der durch die einem Bahnpunkt zugehörige Bahngeschwindigkeit bedingte maximale Bremsweg derart ist, dass der Roboter den Arbeitsraum nicht verlässt, also dessen Grenze G nicht überschreitet.

Dies geschieht in bevorzugter Ausgestaltung folgendermaßen:

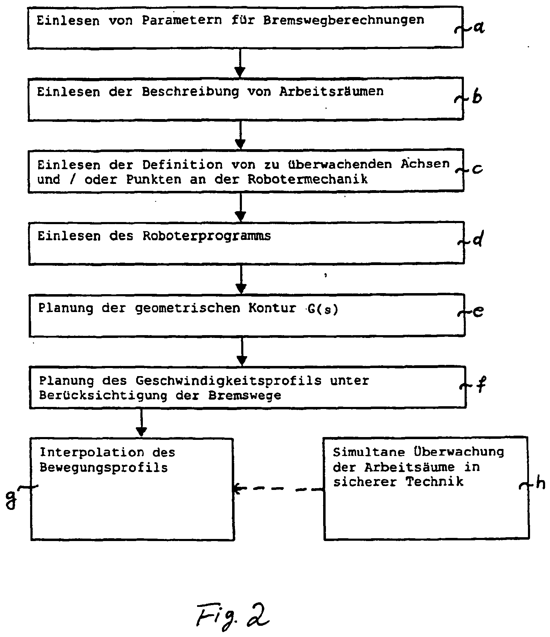

Entsprechend den Schritten **a** bis **d** des Ablaufdiagramms der Fig. 2 erfolgt ein Einlesen der zur Planung der Roboterbahn erforderlichen Daten und des Programms, nämlich im Schritt **a** Einlesen der Parameter für die Bremswegberechnungen, im Schritt **b** Einlesen der Beschreibung von Arbeitsräumen und im Schritt **c** das Einlesen der Definition von zu überwachenden Achsen und/oder Punkten an der Robotermechanik. Darüber hinaus wird (Schritt **d**) das Roboterprogramm eingelesen.

Anschließend erfolgt die Planung der Geometrie der Kontur der Roboterbahn. Ergebnis ist eine Funktion G(s), parametriert über einen sogenannten Bahnparameter s, wie im einfachsten Fall der Bogenlänge.

Anschließend erfolgt (Schritt **f**) die Planung des Geschwindigkeitsprofils unter Berücksichtigung der Bremswege. Hierzu wird für den Bahnparameter zunächst ein Geschwindigkeitsprofil s(t) geplant, das zeitoptimal ist und gewisse programmierte bzw. physikalische Nebenbedingungen einhält, beispielsweise folgendermaßen:

- Der Bediener programmiert gewisse durch den Prozess motivierte Geschwindigkeiten, Beschleunigungen, Rucke (oder spezifiziert: "maximale Geschwindigkeit, Beschleunigung ..."). Üblicherweise wird die Forderung nach maximaler Geschwindigkeit bzw. minimaler Taktzeit unter der Nebenbedingung einer schwingungsarmen Bahn erfüllt, hierbei sind Taktzeit und Schwingungsfreiheit in der Regel gegenläufige Optimierungskriterien.
- Physikalische Nebenbedingungen für den Roboter sind maximal Geschwindigkeiten/Beschleunigungen, Rucke (achsspezifisch/kartesisch), Motormomente, Getriebemomente, kinetische Energie.

Dies führt auf ein Optimierungsproblem der Form

$$\min \ (c1*T+c2*Osc(G(s)))$$

unter den Nebenbedingungen

$$|d/dt \ qi(s(t))| \ \leq qdiMax,$$

$$|\tau iMotor(G(s(t)))| \ \leq \tau MotorMax$$

$$|\tau iGetriebe(G(s(t)))| \leq \tau iGetriebe\ Max$$

und weiteren in der Regel benutzerdefinierten Bedingungen, z.B. die Vorgabe einer maximalen kartesischen Bahngeschwindigkeit oder -beschleunigung, wobei

T: Dauer der Bewegung
Osc(G(s)): ein Funktional,

das das Schwingungsverhalten quantifiziert. Z.B. kann gewählt werden:

$$Osc(G(s)) =$$

$$\sum_{i=1}^{n} \left| \frac{d^3qi(s(t))}{dt^3} \right|$$

d.h. die betragsmäßige Summe der Rucke der einzelnen Achsen wird als Kriterium für Schwingungsanregung verwendet.

c1, c2: benutzerdefinierte bzw. in der Steuerung vorgegebene Konstanten zur Gewichtung der in der Regel gegenläufigen Forderungen "Zeitoptimalität" und "Schwingungsvermeidung". Die Wahl c2=0 entspricht einer rein zeitoptimalen Planung

d/dt qi(s(t)): Drehzahl der Achse i an der Bahnposition qi(s(t)); zur Berechnung muss die Funktion s samt Ableitung zur Zeit t bekannt sein.

qdiMax: maximale Drehzahl der Achse i

$\tau iGetriebe(G(s(t)))$: Getriebemoment der Achse i an der Roboterkonfiguration zum Bahnpunkt G(s(t)); zur Berechnung muss die Funktion s samt erster und zweiter Ableitung zur Zeit t bekannt sein.

$\tau iGetriebe = f(q, d/dt\ q, d^2/dt^2\ q)$ wird z.B. über den Newton-Euler-Algorithmus berechnet.

$\tau iGetriebeMax$: maximales Getriebemoment der Achse i

$\tau iMotor(G(s(t)))$, $\tau iMotorMax$: entsprechend für Motormomente.

Der physikalische Zusammenhang zwischen $\tau iGetriebe$ und $\tau\ iMotor$ wird durch Reibung und/oder ein elastisches Gelenkmodell beschrieben.

Wie vorstehend beschrieben, wird durch polyhomiale Beschreibung (oder Approximation) der Geometrie und polynomiale Beschreibung des Bahnparameters s die Aufgabe der rein zeitoptimalen Planung gelöst. Auch andere bekannte Verfahren der Optimalsteuerung sind möglich.

Die freie Variable der Optimierung ist hier das Geschwindigkeitsprofil s:[0,T] -> [0,L].

Im Folgenden erfolgt die Bestimmung der Geschwindigkeit aufgrund des Abstandes von der Arbeitsraumgrenze; der Abstand des Roboters mit Achskonfiguration q vom zu schützenden Bereich, und F(d, d/dt q, $d^2/dt^2$ q) der maximale kartesische Bremsweg des Roboters mit Achskonfiguration q, Achsgeschwindigkeiten d/dt q und Achsbeschleunigungen $d^2/dt^2$ q. Die Funktion A ist - beispielsweise bei Kenntnis eines CAD-Modells des Roboters und seines Werkzeugs - durch elementare (aber bei einem detaillierten Modell eventuell sehr viele) Abstandsberechnungen effektiv berechenbar. Die Funktion F des Bremswegs ist entweder durch (offline-)Simulation des Bremsvorgangs mit worst-case-Annahmen an die Funktion "sichere Bremsung" ermittelbar, oder durch Messungen. Üblicherweise wird die Funktion F punktweise ermittelt und dann in Form einer Tabelle oder bevorzugt einer polynomialen Approximation gespeichert. Dann kann die Bedingung: Der Roboter muss immer "vor dem zu schützenden Bereich anhalten" folgendermaßen formuliert werden:

$$A(q(s(t)) > F(q(s(t)), d/dt\ q(s(t)), d^2/dt^2\ q(s(t))),$$

d.h. der Abstand vom zu schützenden Bereich ist größer gleich dem "sicheren Bremsweg".

Die Funktion A wird bevorzugt punktweise ausgewertet und aus drei benachbarten Auswertungspunkten wird über Differenzquotienten eine Approximation als Polynom 2. Grades gebildet. Da die Funktion F ebenfalls bevorzugt durch Polynome beschrieben ist, kann ein Algorithmus für den Fall rein zeitoptimaler Planung durch Erweiterung der Nebenbedingungen weiterverwendet werden.

Für die Einbeziehung von Nebenbedingungen zur Schwingungsvermeidung oder allgemeinere Funktionen zusätzlich können an sich bekannte Verfahren eingesetzt werden.

Schließlich erfolgt die Steuerung des Bewegens des Roboters entsprechend der vorstehend beschriebenen Bahnplanung unter Berücksichtigung des Bremswegs durch Interpolation des so gewonnenen Bewegungsprofils (Schritt **g**). Simultan erfolgt eine Überwachung der Bewegung des Roboters bzw. seines Arbeitsraums in sicherer Technik entsprechend der eingangs genannten Definition durch die weiter oben genannten Maßnahmen (redundant, zweikanalig, diversitär).

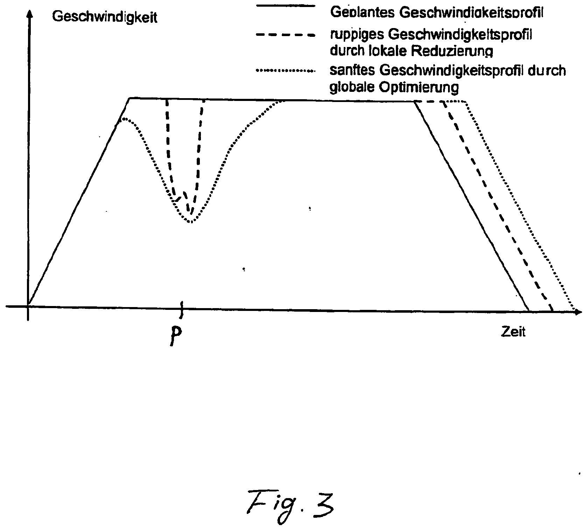

Die Erfindung bedingt, dass, wenn beispielsweise in einem Punkt P (Fig. 1, 3) gegenüber der durch den Arbeitsprozess gewünschten oder angestrebten optimalen Geschwindigkeit aufgrund der Nähe der Bewegungsbahn zur Grenze des Arbeitsraums nur eine geringere Geschwindigkeit zugelassen werden darf, damit im Falle eines Bremsens der Roboter noch innerhalb des Arbeitsraums zum Stillstand kommt, ein sich sanft gleichmäßig veränderndes Geschwindigkeitsprofil, wie dies punktiert dargestellt ist, gegenüber einem ruppigen Geschwindigkeitsprofil (gestrichelt), wie dies durch eine ad hock von der vorgesehenen Bewegungsplanung (durchgezogene Linie) erfolgenden abrupten lokalen Reduzierung der Geschwindigkeit gegeben wäre.

## Patentansprüche

1. Verfahren zum Steuern der Bewegung eines Roboters innerhalb eines durch Grenzen begrenzten Arbeitsraumes, **dadurch gekennzeichnet, dass** die Bahngeschwindigkeit des Roboters mit dem Reduzieren des Abstands zur Grenze des Arbeitsraums derart verringert geplant wird, dass beim Bremsen der Roboter innerhalb der Grenzen des Arbeitsraums zum Stillstand kommt, und dass der Roboter entsprechend dieser Bahnplanung in einer Interpolation vorgesteuert wird.

2. Verfahren nach Anspruch 1, **dadurch gekennzeichnet, dass** der Roboter mit derart vorbestimmten Bahngeschwindigkeiten bewegt wird, dass ein dem jeweiligen Bewegungszustand zugehöriger Bremsweg kleiner als der jeweilige Abstand des Effektors oder des TCP von der Grenze des Arbeitsraums ist.

3. Verfahren nach Anspruch 1 oder 2, **dadurch gekennzeichnet, dass** der Bremsweg in einem Bahnpunkt bei der Bahnplanung aufgrund der dem Bahnpunkt zugehörigen Bewegungszustand des Roboters bestimmt wird.

4. Verfahren nach einem der vorangehenden Ansprüche, **dadurch gekennzeichnet, dass** der Roboter entsprechend einer über einen Bahnparameter, wie der Bogenlänge, parametrierten Bahn bewegt wird.

5. Verfahren nach einem der vorangehenden Ansprüche, **dadurch gekennzeichnet, dass** die jeweilige Bahnpunkten zugehörige Geschwindigkeit in Abhängigkeit von weiteren Nebenbedingungen, wie maximal zulässigen Geschwindigkeiten, Beschleunigungen, achsspezifischen und/oder kartesischen Rucken, Motormomenten, Getriebemomenten oder der kinetischen Energie bestimmt wird.

## Claims

1. A method for controlling the motion of a robot within a workspace which is constrained by borders, **characterized in that** the path velocity of the robot is planned reduced with reduced distance to the border of the working space such that when braking the robot arrives at standstill within the borders of the working space, and that the robot is pre-controlled according to this path planning in an interpolation.

2. A method according to claim 1, **characterized in that** the robot is moved with such predetermined path velocities that a braking distance belonging to a respective motion state is smaller than the respective distance of the effector or TCP to the border of the working space.

3. A method according to claim 1 or 2, **characterized in that** the braking distance in a path point is determined at the path planning due to the motion state of the robot that belongs to the path point.

4. A method according to one of the preceding claims, **characterized in that**, the robot is moved according to a path that is parameterized by a path parameter, such as the arc length.

5. A method according to one of the preceding claims, **characterized in that**, the velocity that belongs to respective path points is determined dependent on further auxiliary constraints, such as maximal admissible velocities, accelerations, axis-specific and/or Cartesian jerking, motor torques, gear torques or kinetic energy.

**Revendications**

1. Procédé de commande du mouvement d'un robot dans un espace de travail délimité par des limites, **caractérisé en ce que** la vitesse de parcours du robot est prévue de manière réduite avec la réduction de la distance par rapport à la limite de l'espace de travail de telle manière que lors du freinage, le robot vienne à l'arrêt dans les limites de l'espace de travail et **en ce que** le robot est précommandé selon cette planification de parcours dans une interpolation.

2. Procédé selon la revendication 1, **caractérisé en ce que** le robot est déplacé à des vitesses de parcours prédéterminées de telle manière qu'une course de freinage afférente à l'état de mouvement respectif soit plus petite que la distance respective de l'effecteur ou du TCP par rapport à la limite de l'espace de travail.

3. Procédé selon la revendication 1 ou 2, **caractérisé en ce que** la course de freinage est déterminée dans un point de parcours lors de la planification de parcours en raison de l'état de déplacement du robot afférent au point de parcours.

4. Procédé selon l'une quelconque des revendications précédentes, **caractérisé en ce que** le robot est déplacé selon un parcours paramétré par un paramètre de parcours tel que la longueur d'arc.

5. Procédé selon l'une quelconque des revendications précédentes, **caractérisé en ce que** la vitesse afférente aux points de parcours respectifs est déterminée selon d'autres conditions accessoires telles que des vitesses, accélérations, saccades spécifiques à l'axe et/ou cartésiennes, couples moteur, couples engrenage autorisés au maximum ou de l'énergie cinétique.

Fig. 1

| Einlesen von Parametern für Bremswegberechnungen | ⌐a |

| Einlesen der Beschreibung von Arbeitsräumen | ⌐b |

| Einlesen der Definition von zu überwachenden Achsen und / oder Punkten an der Robotermechanik | ⌐c |

| Einlesen des Roboterprogramms | ⌐d |

| Planung der geometrischen Kontur G(s) | ⌐e |

| Planung des Geschwindigkeitsprofils unter Berücksichtigung der Bremswege | ⌐f |

| Interpolation des Bewegungsprofils | ⌐g |     | Simultane Überwachung der Arbeitsäume in sicherer Technik | ⌐h |

Fig. 2

Fig. 3

**IN DER BESCHREIBUNG AUFGEFÜHRTE DOKUMENTE**

**In der Beschreibung aufgeführte Patentdokumente**

- EP 1332841 A2
- JP 11347983 A